# EUROPEAN PATENT SPECIFICATION

(11) **EP 1 804 054 B1**
(45) Date of publication and mention of the grant of the patent: **23.04.2008**
(21) Application number: 05425956.9
(22) Date of filing: 30.12.2005
(51) Int. Cl.: G01N 21/76, C12M 1/34, G01N 33/53, B01J 21/00

(54) **Chemical biological device for display and light emission**
Chemisch-biologische Vorrichtung für Anzeige und Lichtemission
Dispositif chimique-biologique d'affichage et d'émission de lumière

(43) Date of publication of application: 04.07.2007
(73) Proprietor: C.R.F. Società Consortile per Azioni, 10043 Orbassano (Torino) (IT)
(72) Inventor: Valerio, Federica c/o C.R.F., 10043 Orbassano (Torino) (IT); Grasso, Valentina, 10041 Carignano (Torino) (IT); Lambertini, Vito Guido, 10049 Giaveno (Torino) (IT); Paderi, Marzia, 10127 Torino (IT); Repetto, Piermario, 10145 Torino (IT); Perlo, Piero, 12048 Sommariva Bosco (Cuneo) (IT)
(74) Representative: Freyria Fava, Cristina

(56) References cited:
- EP-A- 1 484 599
- EP-A- 1 550 826
- DMITRI ROUTKEVITCH ET AL: "Nonlithographic Nano-Wire Arrays: Fabrication, Physics, and Device Applications" IEEE TRANSACTIONS ON ELECTRON DEVICES, IEEE SERVICE CENTER, PISACATAWAY, NJ, US, vol. 43, no. 10, October 1996 (1996-10), XP011015942 ISSN: 0018-9383
- GOVYADINOV A ET AL: "ANODIC ALUMINA MEMS: APPLICATIONS AND DEVICES" MICRO-ELECTRO-MECHANICAL SYSTEMS (MEMS). ASME INTERNATIONAL MECHANICAL ENGINEERING CONGRESS AND EXPOSITION, 5 November 2000 (2000-11-05), pages 313-318, XP002289336
- CHOI J ET AL: "Large-area porous alumina photonic crystals via imprint method" MATERIALS RESEARCH SOCIETY SYMPOSIUM PROCEEDINGS, MATERIALS RESEARCH SOCIETY, PITTSBURG, PA, US, 2002, pages L521-L526, XP002289425 ISSN: 0272-9172
- HEILMANN A ET AL: "PHOTOLUMINESCENT SILOXENES IN NANOPOROUS ALUMINUM OXIDE" ADVANCED MATERIALS, WILEY VCH, WEINHEIM, DE, vol. 10, no. 5, 23 March 1998 (1998-03-23), pages 398-401, XP000739185 ISSN: 0935-9648

## Description

The present invention concerns a display device. In particular, the present invention relates to a display device that exploits chemical and/or biological reactions to generate light emission.

The purpose of the present invention is to realise a display device capable of generating selective, controlled and high-efficiency light emission.

More specifically, the invention is directed to a light emitting device, e.g. known from EP-A-1 550 826, comprising i) a micro-reaction chamber, to which is associated an inlet to receive a reaction liquid, ii) a charge micro-channel connected to the inlet, iii) a porous substratum located inside the micro-reaction chamber and iv) a chemical element immobilized on the porous substratum capable of generating light emission.

According to the present invention, the goal is achieved thanks to the solution that is recalled specifically in the attached claims. The claims form an integral part of the technical instruction provided here in regard to the invention.

The invention concerns a display device comprising a series of micro-reaction-chambers which function as pixels, within which the reaction that generates light emission takes place.

In one embodiment of the present invention, the display device comprises a miniaturised platform within which micro-chambers are present that contain porous substrata, in whose pores biological/chemical elements are immobilised that are capable of bringing about the reactions that generate controlled light emission in specific points.

To dispense the solutions necessary for the "luminous" reaction, the device presents a structured organisation of charge and discharge micro-channels. The charge micro-channels distribute the following to all zones involved: a) the catalyst or bio-mediator (e.g. the biological element) and b) the reaction solutions. The discharge micro-channels perform the function of removing the reaction products from the micro-reaction-chambers, which if allowed to accumulate might have a negative influence on efficiency and might compromise the kinetics of the reaction itself.

In a different embodiment of the present invention, light emission may be controlled by micro-valves and by prisms (optical device of a homogeneous material transparent to radiation). The micro-valves (of micrometric dimensions) regulate the opening and closing of the micro-reaction-chambers and regulate the flow of the solutions involved, the prisms -- adjacent to the micro-reaction-chambersrefract the luminous beam in preferential directions.

In a further embodiment, the device according to the present invention comprises a system of micro-pumps that move the fluid. This solution is capable of solving problems of viscosity and of friction in the micro-channels in which the reaction solutions flow.

The invention will now be described in detail, as a simple example without limiting intent, with reference to the attached figures, in which:
-- figure 1 is a diagram that illustrates the structure of an embodiment of the device according to the present invention in cross-section;
-- figures 2 and 3 show a diagram of the structure -- in cross-section -- of two embodiments of the device according to the present invention.

Thanks to its peculiar structural characteristics, the device according to the present invention presents a number of advantages: 1) it is a miniaturised display device with dimensions in the order of millimetres-micrometres; 2) it is a low-cost system; 3) it is a device that can be re-utilised since washing cycles enable the device to be utilised for successive applications; 4) it is a system with a low degree of technological complexity, since it utilises known technologies that are simple to realise.

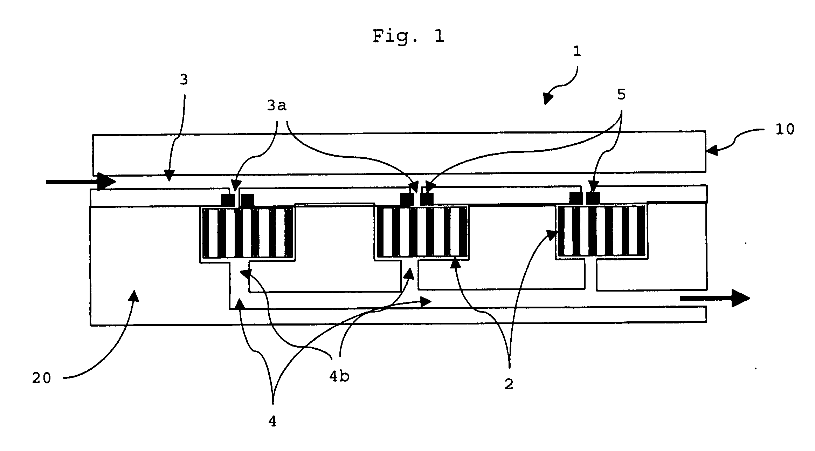

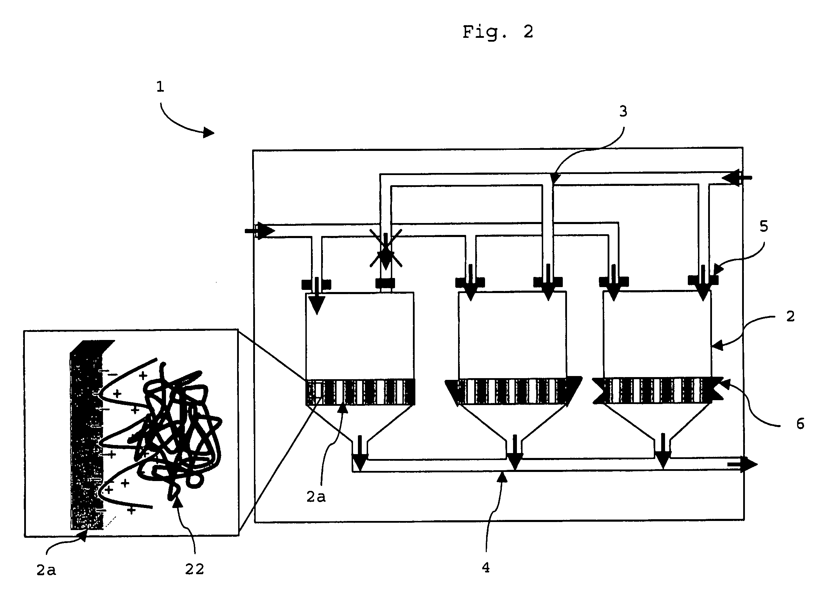

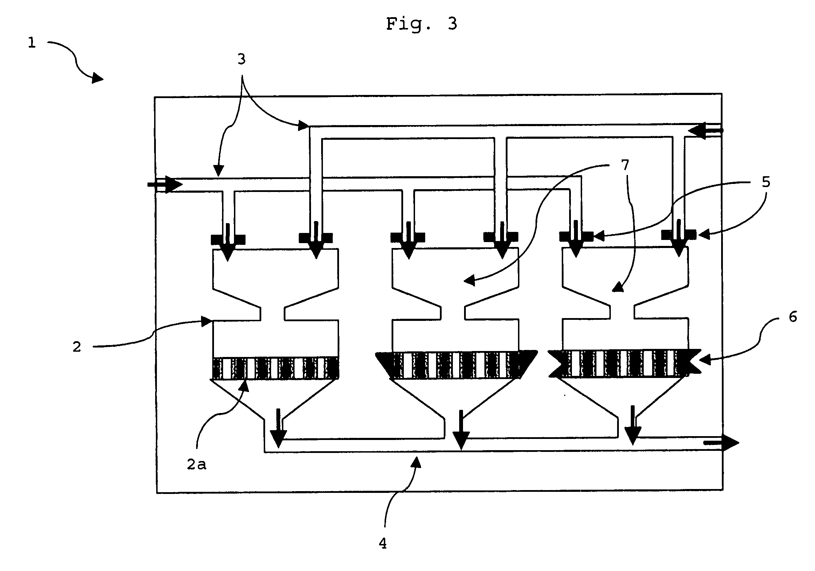

With reference to figures 1, 2 and 3, the display device 1 according to the present invention comprises a miniaturised platform inside which micro-reaction-chambers are present containing a porous substratum 2a, in whose pores biological/chemical elements 22 able to catalyse reactions that generate light emission are immobilised.

The device 1 presents a structured organisation of distinct charge micro-channels 3 and discharge micro-channels 4, that distribute the reaction solutions to the micro-reaction-chambers. The discharge micro-channels 4 perform the function of removing the reaction products from the micro-reaction-chambers 2. At least one charge channel 3 and one discharge channel 4 is provided for each micro-chamber 2.

The micro-reaction-chambers 2, preferably made of glass or silicon, may assume variable geometry and may be characterised by the presence upstream of a mixing chamber 7 for the reagents. The presence of such micro-chambers 7 enables the reaction reagents to mix uniformly.

From the standpoint of their realisation, the micro-reaction-chambers 2 can be subdivided into two hemi-micro-chambers: a basic structure 20 and a covering structure 10. Substantially it is possible to construct the two hemi-micro-reaction-chambers separately and assemble them for example with techniques of solid state diffusion bonding. The supporting structures 20 and the covering structures 10 present one or more charge and discharge channels and are connected to form the micro-channels 3 and 4. As an alternative and to further simplify the manufacturing process, the micro-chambers and the micro-channels may be practised only on a single substratum and leave the second substratum intact to serve as covering structure.

In the embodiments illustrated in figures 1 to 3 the device 1 is equipped with micro-valves 5 on the charge micro-channels 3 and prisms 6, where the micro-valves 5 (of micrometric dimensions) regulate the opening and closing of the micro-reaction-chambers 2 and the flow of reaction solutions and the prisms 6 reflect the luminous beam in preferential directions.

The geometry and organisation of the micro-reaction-chambers 2, the mixing chambers 7 and the micro-channels 3 and 4 may vary depending on requirements; for their realisation it is possible to employ for example photolithographic processes that enable structures with the desired geometry to be drawn on appropriate materials, for example glass. Such structures will be protected from a subsequent process of chemical attack (etching) able to create the said micro-environments or micro-areas.

The porous substratum 2a present in the micro-reaction-chambers 2 is, for example, constituted of anodised porous alumina with through pores. The realisation of the substratum in porous alumina as well as the advantages of its use have already been described in patent applications T02003A000409, EP-A-1 484 599, and US-A-2005/0019799 in the name of the present applicant.

A porous alumina substratum is realised starting from metallic aluminium by means of an electrochemical process known as "anodising". If a highly regular structure is desired that has preferential areas of growth, successive anodising processes must be performed followed by a phase in which the irregular porous alumina film thus formed is reduced, through a process of chemical corrosion (etching) with acid solutions. The dimensions and number of pores may be controlled by varying the anodising conditions (electrolytic solution, physical and chemical parameters) of the metallic aluminium. In general the diameter of the pores varies from 50 to 500 nm whereas their depth is approximately between 1 and 200 micrometres.

The choice of metallic aluminium as starting material to realise the porous substratum 2a presents a significant advantage: aluminium may be deposited on any surface through evaporating techniques and then anodised. In the case of the present display device 1 the metallic aluminium may be deposited and anodised inside a hemi-reaction chamber in the basic structure 20, before this is assembled with its respective covering structure 10. Furthermore the diameter of the pores, which is approximately equal to the wavelength of visible light, selects the transmittable wavelength (generated by the reaction in the micro-reaction-chambers 2) and blocks longer wavelengths including the wavelengths of IR.

A possible means to regulate the opening and closing of charge micro-channels 3 and/or discharge micro-channels 4 is represented by micro-valves 5 realised in SMA or polymer-magnetic materials, sensitive to temperature variations. A signal of the thermal type is, indeed, able to induce heating of the material of which the micro-valves are made, and thus to regulate the closing/opening of the channel. For a more detailed description please refer to patent applications T02003A000390 and EP-A-1 481 705 in the name of the present applicant.

The pores of the porous substratum 2a may be "functionalised" that is made such as to improve the bond with the chemical element or the immobilisation of the bio-mediator that catalyses the "luminous" reaction in the micro-reaction-chamber 2. As a simple example without limiting intent the enzyme "luciferase" could advantageously be used as bio-mediator in the sphere of the display device 1 according to the present invention.

There are numerous techniques to immobilise a biological molecule on a porous substratum: for example, it is possible to form covalent or non-covalent bonds (e.g. hydrogen bonds, van der Waals bonds) between the bio-mediator and the porous substratum or a bi-functional chemical compound capable of bonding on one side to the porous substratum and on the other side to the bio-mediator involved may be used. Techniques that entail the use of non-covalent bonds to immobilise the bio-mediator are preferable because they do not require chemical modification of the bio-mediator itself. As a simple example, the pores of the anodised porous alumina may be functionalised with poly-L-lysine (PLL). PLL is adsorbed on the hydrophilic surface of the pores of the substratum and due to the presence of -NH₂ groups on its side chain it is able to co-ordinate with the hydrophilic groups of the bio-mediator and give rise to hydrogen and/or van der Waals bonds. A second example of our compound able to increase adhesion of the bio-mediator to the alumina substratum is polyprenyl phosphate. The phosphate group functions as an anchor capable of becoming adsorbed into the pores of the matrix and the prenyl tail - making the surface of the alumina more hydrophobic - favours formation of non-covalent bonds between the substratum thus functionalised and the bio-mediator.

The bio-mediator in solution form is distributed through the charge micro-channels 3 to the micro-reaction-chambers 2 to enable its bonding to the porous substratum 2a inside its pores. Through repeated washing cycles, unbonded bio-mediator is eliminated through the discharge micro-channels. After having immobilised the bio-mediator that catalyses the reaction, the reaction reagents are introduced into the micro-reaction-chambers 2.

Adjacent to the micro-reaction-chambers 2 there may be one or more prisms, whose function is that of refractingtotally or partially -- the light emission generated in the micro-reaction-chambers for the purpose of reducing lateral dispersion. In particular, when a ray of incident light strikes the surface of the prism, this is able to guide the refracted ray in a preferential direction.

## Claims

1. Chemical-biological display device (1) comprising:
-- at least one micro-reaction-chamber (2) to which is associated an inlet (3a) to receive a reaction liquid and an outlet (4b) to discharge the reaction product;
-- at least one charge micro-channel (3) connected to said inlet (3a) and at least one discharge micro-channel (4) connected to said outlet (4b);
-- a porous substratum (2a) located inside said micro-reaction-chamber (2);
-- at least one chemical and/or biological element (22) immobilised on the porous substratum (2a) capable of generating light emission when in contact and reacting with the reaction liquid.

2. Device according to claim 1, **characterised in that** it also includes at least one micro-valve (5) capable of controlling the opening and closing of a micro-channel (3,4).

3. Device according to claim 1 or claim 2, **characterised in that** it also includes at least one optical device (6) able to refract the light emitted.

4. Device according to claim 3, **characterised in that** said optical device (6) is an optical prism.

5. Device according to any of the above claims, **characterised in that** said device (1) also includes at least one micro-pump to regulate the flow of the reaction liquid.

6. Device according to any of the above claims, **characterised in that** said device (1) also includes at least one mixing chamber (7) situated upstream from said micro-reaction-chamber (2) and in communication with said micro-reaction-chamber (2).

7. Device according to any of the above claims, **characterised in that** said porous substratum (2a) presents through pores.

8. Device according to claim 2, **characterised in that** said micro-valve (5) is realised in an SMA or polymer-magnetic material sensitive to temperature variations.

9. Device according to any of the above claims, **characterised in that** said chemical and/or biological element (22) is immobilised on said porous substratum (2a) through covalent or non-covalent bonds.

10. Device according to claim 9, **characterised in that** said bonds between said chemical and/or biological element (22) and said porous substratum (2a) are realised through a bi-functional chemical compound capable of bonding on one side to said porous substratum (2a) and on the other side to said biological element (22).

11. Device according to any of the above claims, **characterised in that** said micro-reaction-chamber (2) is comprised of a base structure (20) and a covering structure (10).

12. Device according to claim 11, **characterised in that** said base structure (20) and said covering structure (10) are joined together by means of bonding techniques.

13. Device according to claim 11 or claim 12, **characterised in that** at least said base structure (20) and optionally also said covering structure (10) present one or more charge and discharge channels and one or more micro-chambers that are connected to form said charge micro-channels (3) and said discharge micro-channels (4), said micro-reaction-chambers (2) and said mixing chambers (7).

## Patentansprüche

1. Chemisch-biologisches Anzeigegerät (1), welches Folgendes umfasst:
mindestens eine Mikroreaktionskammer (2), welche mit einer Einlassöffnung (3a) verbunden ist, um eine Reaktionsflüssigkeit aufzunehmen und ein Ablauf (4b), um das Reaktionsprodukt abzuführen;
mindestens einen Befüllungsmikrokanal (3), welcher dem Einlass (3a) und mindestens einem Abführungsmikrokanal (4), welcher mit dem Ablauf (4b) verbunden ist;
ein poröses Substrat (2a), welches auf der Innenseite der Mikroreaktionskammer (2) angeordnet ist;
mindestens ein chemisches und/oder biologisches Element (22), welches auf dem porösen Substrat (2a), welches zur Erzeugung von Lichtabstrahlung fähig ist, wenn es in Kontakt mit der Reaktionsflüssigkeit ist und mit dieser reagiert, immobilisiert ist.

2. Gerät nach Anspruch 1, **dadurch gekennzeichnet, dass** es auch mindestens ein Mikroventil (5) umfasst, welches zum Steuern des Öffnens und Schließens eines Mikrokanals (3, 4) fähig ist.

3. Gerät nach Anspruch 1 oder Anspruch 2, **dadurch gekennzeichnet, dass** es auch mindestens ein optisches Bauteil (6) umfasst, welches zur Brechung des emittierten Lichts fähig ist.

4. Gerät nach Anspruch 3, **dadurch gekennzeichnet, dass** das optische Bauteil (6) ein optisches Prisma ist.

5. Gerät nach irgendeinem der vorstehenden Ansprüche, **dadurch gekennzeichnet, dass** das Bauteil (1) auch mindestens eine Mikropumpe zur Regulierung des Flusses der Reaktionsflüssigkeit umfasst.

6. Gerät nach irgendeinem der vorstehenden Ansprüche, **dadurch gekennzeichnet, dass** das Bauteil (1) auch mindestens eine Mischkammer (7) umfasst, welche stromauf von der Mikroreaktionskammer (2) und in Verbindung mit der Mikroreaktionskammer (2) ist.

7. Gerät nach irgendeinem der vorstehenden Ansprüche, **dadurch gekennzeichnet, dass** das poröse Substrat (2a) Durchgangsporen bildet.

8. Gerät nach Anspruch 2, **dadurch gekennzeichnet, dass** das Mikroventil (5) durch ein SMA- oder polymermagnetisches Material, welches temperaturveränderungsempfindlich ist, realisiert ist.

9. Gerät nach irgendeinem der vorstehenden Ansprüche, **dadurch gekennzeichnet, dass** das chemische und/oder biologische Element (22) auf dem porösen Substrat (2a) durch kovalente oder nicht kovalente Bindung immobilisiert ist.

10. Gerät nach Anspruch 9, **dadurch gekennzeichnet, dass** die Bindung zwischen dem chemischen und/oder dem biologischen Element (22) und dem porösen Substrat (2a) durch eine bifunktionale chemische Zusammensetzung realisiert ist, welche zur Bindung zu dem porösen Substrat (2a) auf der einen Seite und zu dem biologischen Element (22) auf der anderen Seite geeignet ist.

11. Gerät nach irgendeinem der vorstehenden Ansprüche, **dadurch gekennzeichnet, dass** die Mikroreaktionskammer (2) aus einer Basisstruktur (20) und einer abdeckenden Struktur (10) besteht.

12. Gerät nach Anspruch 11, **dadurch gekennzeichnet, dass** die Basisstruktur (20) und die bedeckende Struktur (10) durch Bonding miteinander verbunden sind.

13. Gerät nach Anspruch 11 oder Anspruch 12, **dadurch gekennzeichnet, dass** zumindest die Basisstruktur (20) und optional auch die abdeckende Struktur (10) einen oder mehrere Einlass- und Abführkanäle und eine oder mehrere Mikrokammern bilden, die verbunden sind, um die Einlassmikrokanäle (3) und die Abführmikrokanäle (4), die Mikroreaktionskammern (2) und die Mischkammern (7) zu bilden.

## Revendications

1. Dispositif d'affichage chimique-biologique (1) comprenant :
- au moins une micro-chambre de réaction (2) à laquelle est associée une entrée (3a) pour recevoir un liquide réactionnel et une sortie (4b) pour évacuer le produit de réaction ;
- au moins un micro-canal de charge (3) relié à ladite entrée (3a) et au moins un micro-canal de décharge (4) relié à ladite sortie (4b) ;
- un substrat poreux (2a) situé à l'intérieur de ladite micro-chambre de réaction (2) ;
- au moins un élément chimique et/ou biologique (22) immobilisé sur le substrat poreux (2a) capable de produire une émission lumineuse lorsqu'il est en contact et réagit avec le liquide réactionnel.

2. Dispositif selon la revendication 1, **caractérisé en ce qu'**il comprend également au moins une micro-valve (5) capable de commander l'ouverture et la fermeture d'un micro-canal (3, 4).

3. Dispositif selon la revendication 1 ou la revendication 2, **caractérisé en ce qu'**il comprend également au moins un dispositif optique (6) capable de réfracter la lumière émise.

4. Dispositif selon la revendication 3, **caractérisé en ce que** ledit dispositif optique (6) est un prisme optique.

5. Dispositif selon l'une des revendications ci-dessus, **caractérisé en ce que** ledit dispositif (1) inclut également au moins une micro-pompe pour réguler le débit du liquide réactionnel.

6. Dispositif selon l'une des revendications ci-dessus, **caractérisé en ce que** ledit dispositif (1) inclut également au moins une chambre de mélange (7) située en amont de ladite micro-chambre de réaction (2) et en communication avec ladite micro-chambre de réaction (2).

7. Dispositif selon l'une des revendications ci-dessus, **caractérisé en ce que** ledit substrat poreux (2a) présente des pores traversants.

8. Dispositif selon la revendication 2, **caractérisé en ce que** ladite micro-valve (5) est réalisée dans un matériau SMA ou polymère-magnétique sensible aux variations de température.

9. Dispositif selon l'une des revendications ci-dessus, **caractérisé en ce que** ledit élément chimique et/ou biologique( 22) est immobilisé sur ledit substrat poreux (2a) par l'intermédiaire de liaisons covalentes ou non covalentes.

10. Dispositif selon la revendication 9, **caractérisé en ce que** lesdites liaisons entre ledit élément chimique et/ou biologique (22) et ledit substrat poreux (2a) sont obtenues au moyen d'un composé chimique bifonctionnel capable de se lier d'un côté audit substrat poreux (2a) et de l'autre côté audit élément biologique (22).

11. Dispositif selon l'une des revendications ci-dessus, **caractérisé en ce que** ladite micro-chambre de réaction (2) est constituée d'une structure de base (20) et d'une structure de recouvrement (10).

12. Dispositif selon la revendication 11, **caractérisé en ce que** ladite structure de base (20) et ladite structure de couverture (10) sont reliées ensemble au moyen de techniques de scellement.

13. Dispositif selon la revendication 11 ou la revendication 12, **caractérisé en ce qu'**au moins ladite structure de base (20) et éventuellement également ladite structure de couverture (10) présentent un ou plusieurs canaux de charge et de décharge et une ou plusieurs micro-chambres qui sont reliés pour former lesdits micro-canaux de charge (3) et lesdits micro-canaux de décharge (4), lesdites micro-chambres de réaction (2) et lesdites chambres de mélange (7).
